# EUROPEAN PATENT APPLICATION

(11) **EP 1 791 270 A1**
(43) Date of publication of application: **30.05.2007**
(21) Application number: 05780861.0
(22) Date of filing: 29.08.2005
(51) Int. Cl.: H04B 7/15, H04B 7/26

(54) **RELAY, AND RELAYING METHOD**

(30) Priority: 01.09.2004 JP 2004254322
(71) Applicant: Nokia Corporation, 02150 Espoo (FI)
(72) Inventor: KASHIMA, Tsuyoshi 16-27 Shirahatakamicho, Kanagawa 2210075 (JP); ZHU, Houtao, Kanagawa 2160005 (JP)
(74) Representative: van Walstijn, Bartholomeus G. G.
(86) International application number: PCT/JP2005/015623
(87) International publication number: WO 2006/025298

(57) **Abstract**

According to one aspect of the present invention, a relay station including a first antenna, a second antenna, a transmitter circuit that converts a baseband signal into an RF signal to be transmitted, a receiver circuit that extracts the baseband signal from the received RF signal, a switching unit that switches between a first state in which the first antenna is connected to the receiver circuit, and the second antenna is connected to the receiver circuit, and a second state in which the first antenna is connected to the receiver circuit, and the second antenna is connected to the transmitter circuit, and a communication controlling unit that extracts the baseband signal created from the RF signal received from either one of the first or second communication devices and then, after a predetermined process is applied to the communication data contained in the baseband signal, the communication controlling unit transmits the communication data through the transmitter circuit to another communication device is provided.

## Description

### [Filed of technology]

The present invention relates to a technology for relaying signals that are exchanged between communication devices in wireless communication.

### [Background Art]

Wireless communication such as a mobile phone or wireless LAN network has been one of the most active technical areas in recent years. The rate enabled in the mobile phone network several years ago was no more than several tens of kbps, but the introduction of a third-generation (3G) network has brought the rate of several Mbps into reality. Furthermore, with the target rate of 1 Gbps, a fourth-generation network is now under development. Moreover, in the wireless LAN area, the rate of 11 Mbps for IEEE802.11b that is currently the most common standard as well as 54 Mbps for 802.11a and 802.11g have been achieved. The future standard, 802.11n, is expected to even achieve several hundred Mbps.

A destination point to which mobile communication terminal such as a mobile phone or wireless LAN terminal connects is an access point (or a base station) for a mobile phone network or wireless LAN. However, as the frequency of the radio wave used for communication become higher, the risk of radio waves possibly being blocked by obstacles is increased, which results that the area covered by a single access point becomes smaller. To solve this problem, the number of access points may be increased, but installing an access point is costly and may excessively drive up the overall costs. Therefore, it is suggested to place inexpensive relay stations able to relay radio waves between the access point/base station and mobile communication terminal

As an example of relay stations, there is a repeater that simply amplifies and re-transmits the received radio waves. But if a plurality of repeaters is prepared for a single access point, all those repeaters will amplify and re-transmit the radio waves transmitted by that access point, because traditional repeaters can only amplify received electric waves and re-transmit them. This will lead to wasteful usage of electricity as well as an increase in unnecessary radio waves, causing more problems of interference with other communication. Thus, a next-generation relay station should be able to determine whether the other party in relaying is within the area covered by the device, and then perform the relay action which matches with that status.

It is preferable for the communication rate to not decrease due to the relay when placing the relay station in the communication channel.

It is also preferable for interference that may be caused between the transmitter and the receiver to be taken into careful consideration, because the relay station will have the capabilities of both transmitting and receiving data.

### [Disclosure of Invention]

Thus, a relay station is needed that enables relay that is suitable for the signal to be relayed and also reflects the reduction in communication rate and/or interference.

According to a first aspect of the present invention, there is provided a relay station to be located in a communication channel between a first communication device and a second communication device, comprising:
- a first antenna;
- a second antenna;
- a transmitter circuit that converts a baseband signal into an RF signal to be transmitted;
- a receiver circuit that extracts the baseband signal from the received RF signal;
- a switching unit that switches between a first state in which said first antenna is connected to said transmitter circuit, and said second antenna is connected to said receiver circuit, and a second state in which said first antenna is connected to said receiver circuit, and said second antenna is connected to said transmitter circuit; and
- a communication controlling unit that obtains the baseband signal derived from the RF signal received from either one of said first or second communication devices from said receiver circuit and then, after a predetermined process is applied to the communication data included in said baseband signal, said communication controlling unit transmits said communication data through said transmitter circuit to another communication device.

The abovementioned switching unit can be arranged to switch between said first state and said second state according to a predetermined timing pattern. In this case, it is preferable for the switching unit to be arranged to switch between the first state and second state according to a switching timing between a downlink and an uplink if the abovementioned relay station is used to relay communication of a Time Division Duplex (TDD) architecture.

The abovementioned communication controlling unit can be arranged so as to transmit data through the transmitter circuit while receiving data through the receiver circuit. Furthermore, it is preferable for the abovementioned predetermined process to relate to at least a determination as to whether the communication data is to be relayed, a determination as to whether the communication device that the communication data needs to reach is situated within the area covered by the relay station, or a determination based on the distance between the relay station and the communication device that the communication data needs to reach.

The abovementioned communication controlling unit can be arranged so as to retain information obtained during the first state and then transmit the retained information for the subsequent first state. Similarly, the abovementioned communication controlling unit can be arranged to retain information obtained during the second state and then transmit the retained information for the subsequent second state.

The relay station provided according to the first aspect of the present invention can be arranged to include a first duplicating unit that splits the RF signal to be transmitted output by the transmitter circuit and duplicate said RF signal to be transmitted and a first interference-reducing unit that adjusts the amplitude and/or phase of said duplicated RF signal to be transmitted and deducts the adjusted RF signal from the RF signal that is input into the receiver circuit. In this case, the first interference-eliminating circuit can be arranged to adjust the amplitude and/or phase of the duplicated RF signal to be transmitted to that of the RF signal to be transmitted originated from the antenna connected to the transmitter circuit and captured by the antenna connected to the receiver circuit.

Furthermore, the relay station provided according to the first aspect of the present invention can be arranged to include a second duplicating unit that splits a signal to be transmitted before being converted into an RF signal to be transmitted by the transmitter circuit and duplicates said signal to be transmitted and a second interference-eliminating circuit that adjusts the strength and/or phase of said duplicated signal and, in the receiver circuit, deducts said adjusted signal from the received signal after being converted from the RF signal. In this case, the second interference-eliminating circuit can be arranged to adjust the strength and/or phase of the duplicated signal to that of the signal to be transmitted that traverses into the receiver circuit through the antenna connected to the receiver circuit from the antenna connected to the transmitter circuit.

Preferably, the first antenna and/or the second antenna has directivity. The first antenna and/or second antenna may be a group of antennas (e.g., MIMO (Multiple Input Multiple Output)). Furthermore, it can be arranged so that the first antenna is used for communication with the first communication device, and the second antenna is used for communication with the second communication device.

The relay station provided according to the first aspect of the present invention can be applied, for example, to a relay station that relays communication between an access point and a terminal in a wireless LAN, a relay station that relays communication between an access point and a terminal in the cellular mobile phone network, and a relay station that relays communication between terminals in a multihop network.

Furthermore, a relay station according to the first aspect of the present invention can be implemented by being integrated into a communication terminal.

According to a second aspect of the present invention, a method is provided that relays, via a relay station, a signal exchanged between a first communication device and a second communication device that communicates using a Time Division Duplex (TDD) system, wherein:
- during a first downlink,
   · said first communication device transmits a first RF signal to said relay station, and
   · said relay station receives said first RF signal and extracts a first baseband signal contained in said first RF signal;
- during a first uplink after said first downlink,
   · said second communication device transmits a second RF signal to said relay station, and
   · said relay station receives said second RF signal and extracts a second baseband signal contained in said second RF signal;
- during a second downlink after said first uplink,
   · said first communication device transmits a third RF signal to said relay station, and
   · said relay station converts said first baseband signal into an RF signal to be transmitted and transmits the same to said second communication device, and also receives said third RF signal and extracts a third baseband signal contained in said third signal; and
- during a second uplink after said second downlink,
   · said second communication device transmits a fourth RF signal to said relay station, and
   · said relay station converts said second baseband signal into an RF signal to be transmitted and transmits the same to said first communication device, and also receives said fourth RF signal and extracts a fourth baseband signal contained in said fourth signal.

In this case, if there is no communication device to which a baseband signal is to be transmitted within the area covered by said relay station, the baseband signal does not need to be converted into the RF signal to be transmitted and may be discarded. In addition, the relay station may include a first antenna used to communicate with the first communication device and a second antenna used to communicate with the second communication device and it can be arranged so that, during a downlink, the first antenna is connected to the receiving circuit of the relay station and the second antenna is connected to the transmitting circuit of the relay station, and during an uplink, the first antenna is connected to the transmitting circuit and the second antenna is connected to the receiving circuit.

According to a third aspect of the present invention, a relay station which is to be located in a communication channel between a first communication device and a second communication device is provided, comprising:
- a first antenna;
- a second antenna;
- a transmitter circuit connected to either one of said first antenna or said second antenna, that converts a baseband signal into an RF signal to be transmitted;
- a receiver circuit connected to the other of said first antenna or said second antenna, that extracts said baseband signal from the received RF signal;
- a communication controlling unit that transmits data through said transmitter circuit while receiving data through said receiver circuit;
- a first duplicating unit that splits the RF signal to be transmitted that is output by said transmitter circuit and duplicates said RF signal to be transmitted; and
- a first interference-eliminating unit that adjusts the amplitude and/or phase of said duplicated RF signal and deducts said adjusted RF signal from the RF signal that is input into said receiver circuit.
In this case, the first interference-eliminating circuit may be arranged to adjust the amplitude and/or phase of the duplicated RF signal to be transmitted to that of the RF signal to be transmitted originated from the antenna connected to the transmitter circuit and captured by the antenna connected to the receiver circuit.

According to a fourth aspect of the present invention, a relay station which is to be located in a communication channel between a communication device and a second communication device is provided, comprising:
- a first antenna;
- a second antenna;
- a transmitter circuit connected to either one of said first antenna or said second antenna, that converts a baseband signal into an RF signal to be transmitted;
- a receiver circuit connected to the other of said first antenna or said second antenna, that extracts the baseband signal from the received RF signal;
- a communication controlling unit that transmits data through said transmitter circuit while receiving said data through said receiver circuit;
- a second duplicating unit that splits a signal to be transmitted before being converted into an RF signal to be transmitted by said transmitter circuit and duplicates said signal to be transmitted; and
- a second interference-eliminating circuit that adjusts the strength and/or phase of said duplicated signal and, in said receiver circuit, deducts said adjusted signal from the received signal after being converted from the RF signal.
   In this case, the second interference-eliminating circuit may be arranged to adjust the strength and/or phase of the duplicated signal to that of the signal to be transmitted that traverses into the receiver circuit through the antenna connected to the receiver circuit from the antenna connected to the transmitter circuit.

For the relay station provided according to the third and fourth aspects of the present invention, it is preferable for the first and/or second antenna to have directivity. Alternatively, the first and/or second antenna may be a group of antennas (e.g., MIMO (Multiple Input Multiple Output)). Furthermore, it can be arranged so that the first antenna may be used to communicate with the first communication device, and the second antenna may be used to communicate with the second communication device.

The relay station according to the third and fourth aspects of the present invention can be arranged to include a switching unit that switches between a first state in which said first antenna is connected to the receiver circuit and the second antenna is connected to the receiver circuit and a second state in which the first antenna is connected to the receiver circuit and the second antenna is connected to the transmitter circuit.

The relay station provided according to the third and fourth aspects of the present invention can be applied to a relay station that relays communication via a time-division multiplexing system or a relay station that relays communication via a Frequency Division Duplex (FDD) system. It can be also applied to a relay station that relays communication between an access point in the wireless LAN and a terminal, one that relays communication between an access point for the cellular mobile phone and a terminal, and one that relays communication between terminals in the multihop network. In addition, it can be implemented by being integrated into a communication terminal.

With the present invention, a relay station that enables relay suitable for a signal to be relayed and also prevents reduction in the communication rate and/or interference can be achieved.

### [Description of preferred embodiments]

With reference to attached drawings, the preferred embodiments of the present invention will be explained below.

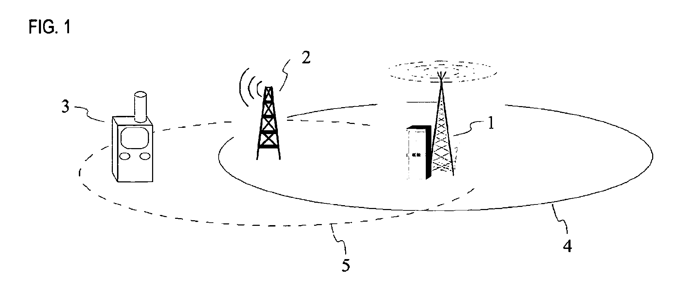

Figure 1 illustrates one example of situations in which the present invention is used. 1 indicates an access point used in the mobile phone network, 2 indicates a relay station according to the present invention, and 3 indicates a mobile communication terminal. The access point 1 is connected to an upper-level network, receives data to be transmitted to the mobile communication terminal from the upper network and also transmits data from the mobile communication terminal 3 to the upper-level network. The access point 1, depending upon its communication method, is also referred to as a base station (BS or Base Transceiver Station, BTS) other than an access point.

In Figure 1, the access point 1 needs to communicate with the mobile communication terminal 3, but a mobile communication terminal 3 is not situated within the area 4 covered by the access point 1. On the other hand, the area 5 covered by the relay station 2 covers both the access point 1 and the mobile communication terminal 3. Then, the relay station 2 is selected for use to relay communication between the access point 1 and the mobile communication terminal 3. The relay station 2 receives radio wave signals from the access point 1 and re-transmits them to the mobile communication terminal 3, and then conversely receives radio wave signals from the mobile communication terminal 3 and re-transmits them to the access point 1.

Four examples of the relay station according to the present invention will be explained below. These are used in situations such as in Figure 1.

### [Embodiment 1]

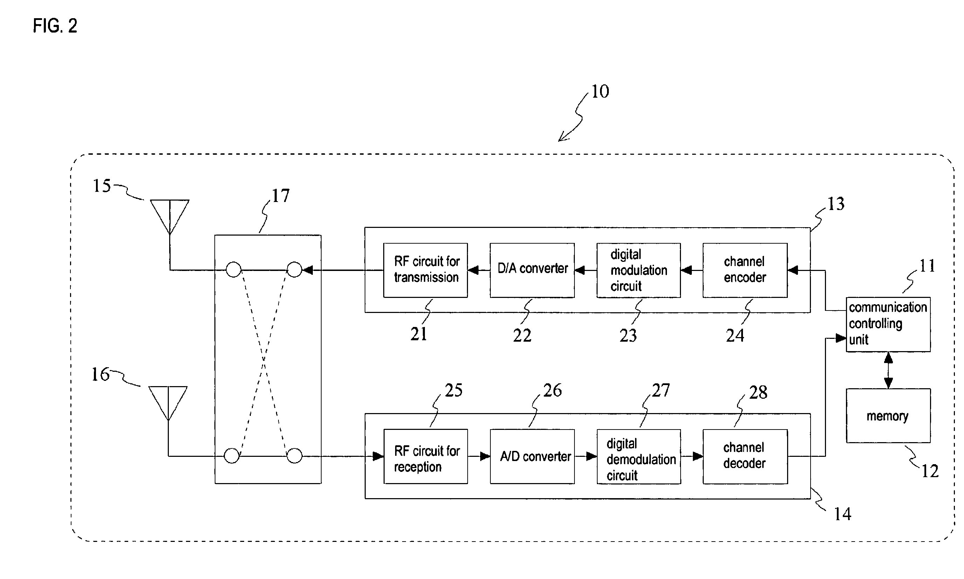

Figure 2 is a block diagram illustrating the first embodiment of the relay station according to the present invention. The relay station 10 in this embodiment is a relay station that relays communication of Time Division Duplex (TDD) architecture. The relay station 10 includes a communication controlling unit 11, a memory 12, a transmitter circuit 13, a receiver circuit 14, a first antenna 15, a second antenna 16, an antenna switch 17, and so on. The first antenna 15 and second antenna 16 are preferably antennas that have directivity. For example, the first antenna 15 has directivity toward the access point, and the second antenna 16 has directivity toward the opposite direction, which is the direction where the mobile communication terminal is situated. In addition, the first antenna 15 and second antenna 16 is to be placed with consideration of minimizing interference. The transmitter circuit 13 converts data to be transmitted through the baseband processing or frequency conversion processing, etc., into RF signals for transmission, and includes an RF circuit for transmitting 21 a D/A converter 22, a digital modulation circuit 23, a channel encoder 24, and so forth. The receiver circuit 14 extracts, from the received RF signal, data to be relayed through frequency conversion or baseband processing, and includes a RF circuit for reception 25, an A/D converter 26, a digital demodulation circuit 27, a channel decoder 28, and so on.

The channel encoder 24 makes data that is to be transmitted into a frame in accordance with the communication protocol and performs processes such as error control encoding or interleaving. The digital modulation circuit 23 digitally modulates the output signal from the channel encoder 24 by a method suitable to the communication protocol. The RF circuit for transmission 21 converts the output of the digital modulation circuit 23 that was analog-modulated by the D/A converter 22 into a carrier frequency and also amplifies it into the necessary amplitude. The RF circuit for reception 25 amplitudes the received RF signal for frequency conversion. The digital demodulation circuit 27 demodulates the output signal of the RF circuit 25 for reception that was digitally converted by the A/D converter 26 in accordance with the communication protocol to extract the baseband signal. The channel decoder 28 performs processes such as error control decoding, deinterleaving, frame analysis, and separation of header information to the baseband signal demodulated by the digital demodulation circuit 27. The communication controlling unit 11 receives data processed by the channel decoder 28 and performs a predetermined process on the data. Details of such processing depend on the embodiment, but, for example, analysis processes can be implemented for whether the received data is to be relayed, whether the other communication party to which the received data is to be transmitted is situated within the area covered by the relay deice, or how far the other communication party is from the relay station, and so forth. Data conveyed to the communication controlling unit 11 is temporarily stored in the memory 12. When the relay station 10 transmits the data, the communication controlling unit 11 reads, from the memory 12, data that is to be transmitted and conveys it to the channel encoder 24.

The communication controlling unit 11 does not transmit relevant data if there is no other communication party to which the received data is to be transmitted within its coverage. Therefore, unnecessary radio waves will not be radiated into the communication channel, which means that communication channel is kept clean. In addition, this leads to saving of electricity power. The communication controlling unit 11 may also have the capability to control signal gain in the RF circuit for transmission 21 or the RF circuit for reception 25, depending upon the distance of the other communication party.

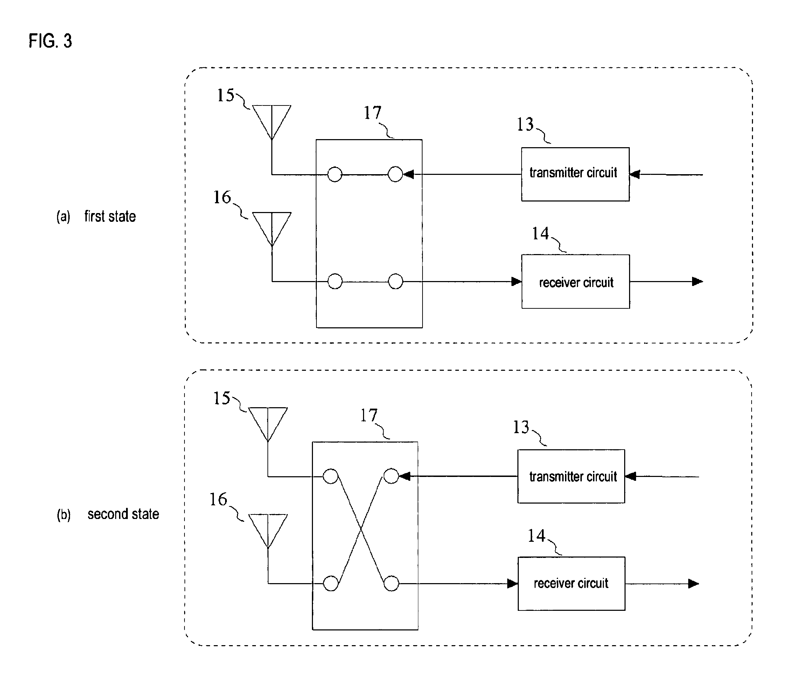

The antenna switch 17 switches between a first state in which the first antenna 15 is connected to the transmitter circuit 13 and the second antenna 16 is connected to the receiver circuit 14, and a second state in which the first antenna 15 is connected to the receiver circuit 14 and the second antenna 16 is connected to the transmitter circuit 13. This is illustrated in Figure 3. Figure 3(a) shows that the first antenna 15 is connected to the transmitter circuit 13 and the second antenna 16 is connected to the receiver circuit 14. On the other hand, Figure 3(b) shows the first antenna 15 connected to the receiver circuit 14 and the second antenna 16 connected to the transmitter circuit 13.

In general, switching between the first state illustrated in Figure 3(a) and the second state illustrated in Figure 3(b) may be arranged so as to work according to a predetermined timing, or by means of control by the communication controlling unit 11. However, the relay station 10 in the present embodiment relays communication using the TDD architecture, so the antenna switch 17 is arranged to switch between the first state and second state according to a switching timing of downlink and uplink.

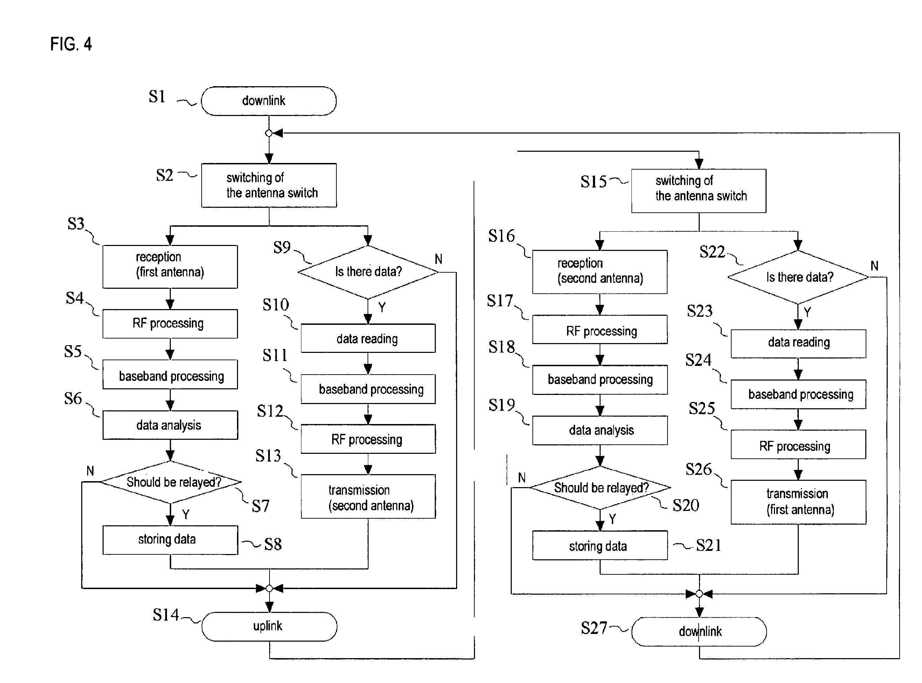

Next, with reference to Figure 4, operation of the relay station 10 will be explained. First, in step 1, it is assumed that the direction of communication is changed to downlink. In other words, it is assumed that it switches to the timing to transmit data from the access point to the mobile communication terminal. Then, in step 2, the antenna switch 17 selects, from among the first antenna 15 and second antenna 16, one antenna that has directivity toward the access point and connects it to the receiver circuit 14 and the other antenna that has directivity toward the mobile communication terminal to the transmitter circuit 13. In this embodiment, assuming that the first antenna 15 has directivity toward the access point, the state of the antenna switch 17 in step 2 is set to the state illustrated in Figure 3(b).

After step 2, steps S3 to S8 (operations performed by the receiver) and steps S9 to S13 (operations performed by the transmitter) are performed in parallel. At the receiver, by the first antenna 15, radio wave signals are first received from the access point (step S3). Next, the received radio wave signals are processed (e.g., frequency conversion) by the receiver circuit 14 (step S4), and furthermore, baseband processing such as digital demodulation processing, error control decoding, frame analysis, and separation of header information are performed by the digital demodulation circuit 27/channel decoder 28. (step S5). In step S6, the communication controlling unit 11 samples output data from the channel decoder 28 and then analyzes whether such data is to be relayed, or whether the other communication party is situated within the covered area, etc. If such data is not to be relayed, or there is no such communication party within the area, the unit discards such data and waits for step S 14. If such data is to be relayed and the other communication party is situated within the area, such data will be stored in the memory 12.

At the transmitter after step S2, the communication controlling unit 11 determines whether data that is to be transmitted is embedded. If data that is to be transmitted is not embedded, it waits for step S14. If such data is not embedded, the data is read from the memory 12 and then conveys it to the channel encoder 24 (step S 10). Next, the channel encoder 24 or digital modulation circuit 23 on the next level performs baseband processing such as frame building, error control encoding, digital modulation, and so forth to data conveyed from the communication controlling unit 11 (step S11). Data on which the baseband processing is performed is converted into an analog signal and conveyed to the RF circuit for transmission 21. Then, the signal of the RF circuit for transmission 21 is further processed by highfrequency modulation/amplification, and is then transmitted to the mobile communication terminal through the second antenna 16.

Thus, the relay station 10 according to the present invention can perform the receiving operation and transmitting operation in parallel, so the communication rate between the access point and mobile communication terminal will not be decreased by half due to relaying.

Step S14 shows the timing when the direction of communication is changed to an uplink. In other words, from here, it changes to the timing to transmit data from the mobile communication terminal to the access point. Then, the antenna switch 17 connects the first antenna 15 that has directivity toward the access point to the transmitter circuit 13, as well as the second antenna 16 that has directivity toward the mobile communication terminal to the receiver circuit 14 (step S15). Therefore, in step S15, the antenna switch 17 changes to the state illustrated in Figure 3(a).

After step S15, steps S16 to S21(operations by the receiving end) and steps S22 to S26 (operations by the transmitting end) are performed in parallel. These correspond, respectively, to steps S3 to S8 and steps S9 to S13, which were explained earlier. However, unlike steps before step S 14, data reception is performed via the second antenna 16 and data transmission via the first antenna 15. Even after step S15, the reception and transmission operations are performed in parallel, so the communication rate between the access point and mobile communication terminal will not be decreased by half due to relaying. In step S27, the direction of communication reverts to a downlink. Then, the operation also reverts to step S2, where the antenna switch 17 switches the connection and the same transmission and reception operations are repeated.

In TDD communication, switching between downlink and uplink has to be performed very precisely in a timely manner. Therefore, if such timing is lost by relaying data by the relay station 10, this may cause some inconveniences.
Therefore, the communication controlling unit 11 temporarily retains, in memory 12, the output data from the channel decoder 28 obtained during the present downlink period, and in subsequent downlink periods, it reads such data from the memory 12 and then transmits it. With reference to Figure 4, data received by the receipt operation, which belongs to step S1, is not transmitted by the operation that belongs to step S1 but rather by the transmitting operation that belongs to the next step S27. This is the same in the case of an uplink.

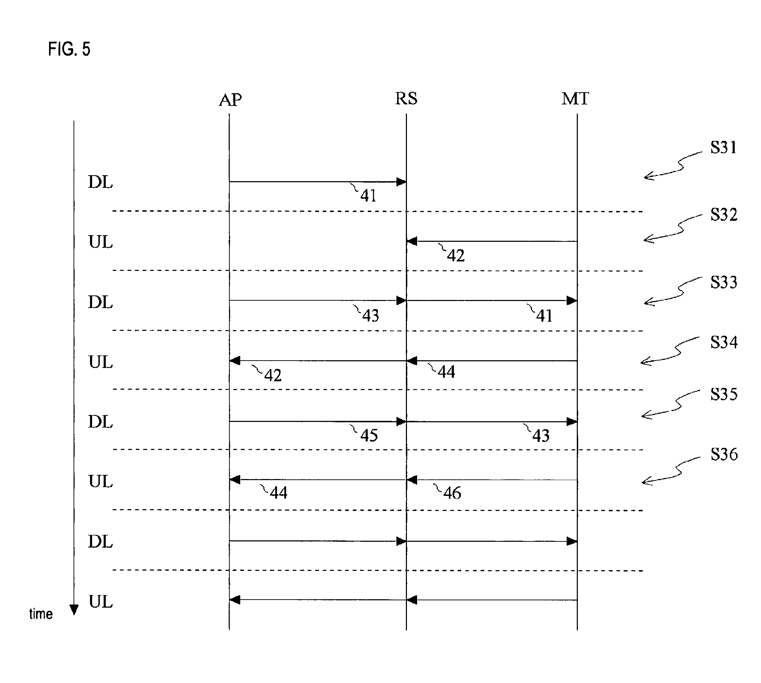

Next, with reference to Figure 5, the relay of communication by the relay station 10 is illustrated. In this figure, AP denotes the access point, RS denotes the relay station 10 according to the present invention, MT denotes the mobile communication terminal, DL denotes the period of the downlink, and UL denotes the uplink. It is assumed that time progresses from top to bottom.

Step S31 shows the period of the downlink, in which the antenna switch 17 is in the state in Figure 3(b). RS receives the signal 41 from AP but does not have data to relay to the MT, so it does not transmit any data. RS temporarily retains the signal 41. Step S32 shows the period of the uplink, in which the antenna switch 17 is switched to the state in Figure 3(a). RS receives the signal 42 from the MT but does not have data to transmit to the AP, so it does not transmit any data. The RS also temporarily retains the signal 42. Step S33 is the period of the downlink. The antenna switch 17 is switched to the state in Figure 3(b). Here, RS not only receives the signal 43 from the AP and retains it but also transmits the signal 41 retained in step S31, which is the last downlink period, to the MT. Step S34 is the period of the uplink, in which the antenna switch 17 is switched to the state in Figure 3(a). RS not only receives the signal 44 from MT and retains it but also transmits the signal 42 retained in step S32, which is the last uplink period, to the AP. In the same way, the signal 43 is transmitted to the MT in step S35, which is the next downlink period, and the signal 44 is transmitted to the AP in step S36, which is the next uplink period.

Thus, if a relay station 10 is not locally situated, the signal to be transmitted from the AP to the MT during one downlink period will reach the MT one cycle later, but the throughput will not be decreased. In addition, even if there is a plurality of relay stations between the AP and the MT, the application of the present invention will, in principle, prevent decreased throughput between the relay stations. Therefore, even in the case of such a multihop network, the level of decreased throughput can be minimized. In the multihop network, the mobile communication terminal sometimes also serves as the relay station, so when the present invention is used in this case, it is preferable for the mobile communication terminal and relay station according to the present invention to be integrated with each other.

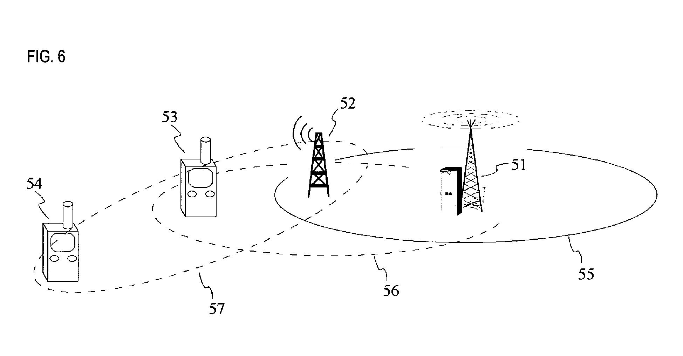

With reference to Figure 6, the embodiment in which the present invention is applied to a relay station in a multihop network will be explained. 51 shows an access point, 52 shows a relay station according to the present invention, and 54 shows a mobile communication terminal. 53 is both a mobile communication terminal and a relay station according to the present invention, in which the capabilities of the communication terminal and the relay station according to the present invention have been integrated.

The mobile communication terminal 54 needs to communicate with the access point 51, but a mobile communication terminal 54 is not situated within the area 55 covered by the access point 51 or within the area 56 covered by the relay station 52. However, the area 57 covered by the relay station and mobile terminal 53 covers both the relay station 52 and the mobile terminal 54, so the mobile terminal 53 also serves as a relay station. Data transmitted from the access point 51 is relayed via the relay station 52 and the relay station and mobile terminal 53 and reaches the mobile terminal 54. Data transmitted from the mobile terminal 54 also reaches the access point 51 via the relay station and mobile terminal 53 and the relay station 52. Thus, communication may be performed in the multihop network via a plurality of relay stations, but according to the relay method of the present invention, throughput will not, in principle, be decreased due to the relay. Therefore, a plurality of relay stations can be used without adversely affecting the communication rate.

### [Embodiment 2]

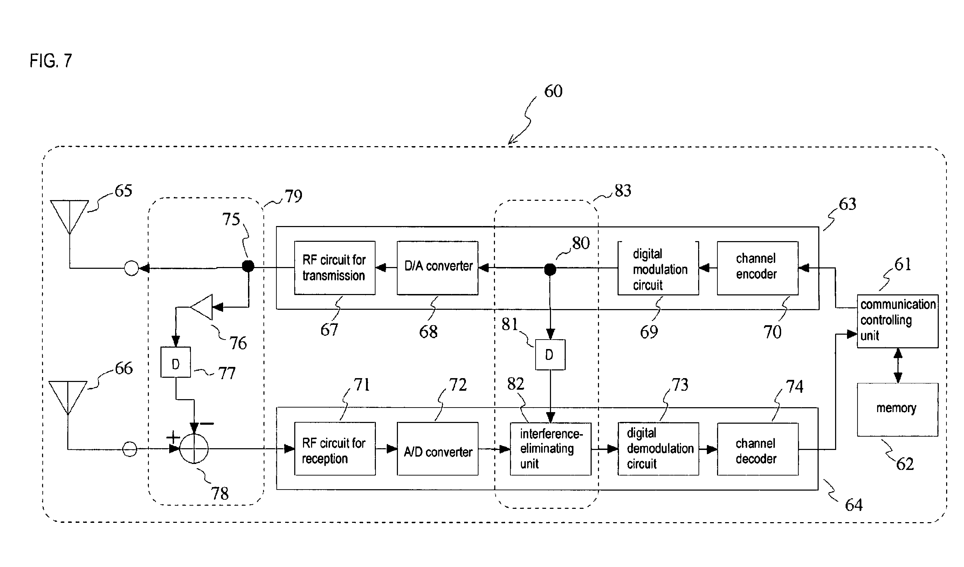

Next, with reference to Figure 7, a second embodiment of the present invention will be explained. Figure 7 is a block diagram illustrating the second embodiment of the relay station according to the present invention. Similar to the relay station 10 illustrated in Figure 2, the relay station 60 includes a communication controlling unit 61, a memory 62, a transmitter circuit 63, a receiver circuit 64, a first antenna 65, a second antenna 66, and so forth. These blocks have similar functionalities as corresponding blocks of the relay station 10 illustrated in Figure 2. The first antenna 65 or second antenna 66 is also preferably an antenna that has directivity, such as the first antenna 65 having directivity toward the access point or the second antenna 66 having directivity toward the opposite direction, which is the direction in which the mobile communication terminal is situated. Similar to the transmitter circuit 13 in Figure 2, the transmitter circuit 63 is a unit that converts data to be transmitted from the baseband signal into RF signals for transmission, and includes an RF circuit for transmitting 67, a D/A converter 68, a digital modulation circuit 69, a channel encoder 70, and so on. Furthermore, similar to the receiver circuit 14 in Figure 2, the receiver circuit 64 is a unit that extracts the baseband signal from the received RF signals, and includes an RF circuit for receiving 71, an A/D converter 72, a digital demodulation circuit 73, a channel decoder 74, and so forth. Blocks such as the transmitter circuit 63 or the receiver circuit 64 also have similar functionalities to corresponding blocks in Figure 2.

However, unlike the relay station 10, the relay station 60 includes an RF-level interference-eliminating circuit 79. The RF-level interference-eliminating circuit 79 is for eliminating interference by the RF signal that is originated from the output RF signal of the transmitter circuit 63 radiated by the first antenna 65 connected to the transmitter circuit 63 and captured by the second antenna 66 connected to the receiver circuit 64 and traverses into the receiver circuit 64. The interference-eliminating circuit 79 includes an RF signal splitting unit 75, a gain regulator 76, a delay device 77, and an accumulator 78. By splitting the output RF signal of the transmitter circuit 63, the RF signal splitting unit 75 makes a copy of the output RF signal of the transmitter circuit 63. The gain regulator 76 adjusts the copied RF signal in accordance with the amplitude of the transmitting RF signal that traverses into the receiver from the first antenna through the second antenna. The delay device 77 adjusts the phase of the copied RF signal so as to be a reverse phase from the phase of the transmitting RF signal that traverses into the receiver from the first antenna through the second antenna. The accumulator 78 accumulates the amplitude and the copied RF signal for which the phase is adjusted. Accordingly, the RF-level interference-eliminating circuit 79 can substantially eliminate the RF signal that traverses from the transmitter into the receiver from the received RF signal. Before determining the amount of adjustment of the gain regulator 76 or the delay device 77, it is necessary to know the amplitude or phase of the RF signal to be transmitted that traverses from the transmitter into the receiver in advance.

The RF-level interference-eliminating circuit 79 prepares the interference element that is to be eliminated from the receiving signal by directly copying a signal that is a transmission signal, which can cause interference. Therefore, there is no need to estimate an element of interference, so high interference-eliminating performance can be achieved.

Furthermore, the relay station 60 includes a digital-level interference-eliminating circuit 83. The digital-level interference-eliminating circuit 83 is for eliminating signals that traverse from the transmitter into the receiver in the state of the digital signal. The digital-level interference-eliminating circuit 83 has a digital signal splitting unit 80, a delay device 81, and an interference eliminating unit 82. The digital signal splitting unit 80 makes a copy of itself by splitting the output signal of the digital modulation circuit 69. The delay device 81 adjusts the phase of the copied digital signal, by means of RF processing or the first antenna 65 and the second antenna 66, in accordance with the phase that digital signals that are originals of copies that traverse into the receiver appear in the output of the A/D converter 72. The interference eliminating unit 82 adjusts the amplitude of the copied signals for which the phase is adjusted and eliminates it from the output signal of the A/D converter 72. The signal strength or phase that appears in the output of the A/D converter 72 via the first antenna 65/the second antenna 66 among the output signals of the digital modulation circuit 69 may be analyzed in advance. However, it is also possible to analyze these during the relay operation by means of a method of detecting the correlation between the output signal of the A/D converter 72 and relevant copied signal.

In the same way as the RF-level interference-eliminating circuit 79, the digital-level interference-eliminating circuit 83 also makes an interference element that is to be eliminated from the received signal by directly copying the signal that can cause interference, which is a transmission signal. Therefore, there is no need to estimate the element of interference to be made, so high interference-eliminating performance can be achieved.

In this embodiment, the digital-level interference-eliminating circuit 83 is provided between the analog/digital converter and the digital demodulation circuit, but the present invention is not limited to this arrangement, and it may be placed in other locations for baseband processing.

The relay station 60 includes both the RF-level interference-eliminating circuit 79 and the digital-level interference-eliminating circuit 83, but in this embodiment, it can be arranged to include only one of these.

In the relay station 60, the locations of the first antenna 65 and second antenna 66 need to be considered thoroughly in order to minimize interference. However, the RF-level interference-eliminating circuit 79 and digital-level interference-eliminating circuit 83 maximize the benefits, especially when interference cannot be reduced sufficiently due to the short distance between the first antenna 65 and second antenna 66.

### [Embodiment 3]

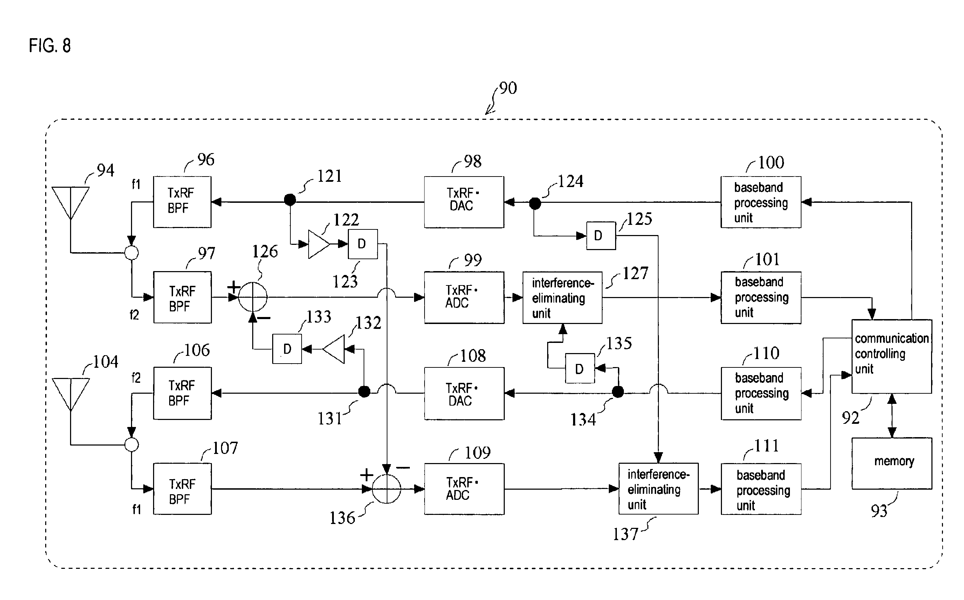

Next, a third embodiment will be explained in which the interference-eliminating device according to the present invention is applied to a relay station that relays communication via a Frequency Division Duplex (FDD) protocol. Figure 8 is a block diagram for illustrating the third embodiment of the relay station according to the present invention.

The relay station 90 includes a communication controlling unit 92, a memory 93, an antenna 94, a band convey filter for transmitted frequency 96, a band convey filter for received frequency 97, a transmitter RF/DAC unit 98, a receiver RF/ADC unit 99, a transmitter baseband processing unit 100, and a receiver baseband processing unit 101. As the relay station 90 is a communication device of FDD protocol, both a transmitter circuit and a receiver circuit will be needed. Therefore, the relay station 90 further includes an antenna 104, an antenna switch 105, a band convey filter for transferred frequency 106, a band convey filter for received frequency 107, a transmitter RF/DAC unit 108, a receiver RF/ADC unit 109, a transmitter baseband processing unit 110, and a receiver baseband processing unit 111

The antenna 94 has directivity toward the access point. The band convey filter for transmitted frequency 96 is a band convey filter for conveying frequency f1 for an uplink. The transmitter RF/DAC unit 98 corresponds to the RF circuit for transmission 67 and the D/A converter 68 of the relay station 60 in Figure 7. In addition, the transmitter baseband processing unit 100 corresponds to the digital modulation circuit 69 and the channel encoder 70 of the relay station 60 in Figure 7. The band convey filter for received frequency 97 is a band convey filter for conveying frequency f2 for a downlink. The receiver RF/ADC unit 99 corresponds to the RF circuit for reception 71 and the A/D converter 72 of the relay station 60 in Figure 7, while the receiver baseband processing unit 101 conveys data to the digital modulation circuit 73 and the channel decoder 74 of the relay station 60 in Figure 7.

In the same way, the antenna 104 has directivity toward the mobile communication terminal. The band convey filter for transmitted frequency 96 is one for downlink frequency f2. Furthermore, the transmitter RF/DAC unit 108 corresponds to the transmitter RF/DAC unit 98, and the transmitter baseband processing unit 110 corresponds to the transmitter baseband processing unit 100. Furthermore, the band convey filter for received frequency 107 is one that conveys the uplink frequency f1, and the receiver RF/ADC unit 109 corresponds to the receiver RF/ADC unit 99, and the receiver baseband processing unit 111 corresponds to the receiver baseband processing unit 101.

In the downlink channel, the relay station 90 receives, through the antenna 94 and the band convey filter 97, the RF signal of frequency f2 transmitted from the access point, and frequency-modulates/digitally converts these RF signals by the receiver RF/ADC unit 99. In addition, digital demodulation, error control decoding, frame analysis, and so forth performed by the receiver baseband processing unit 101. The resulting data is conveyed to the communication controlling unit 92, processed by a predetermined process, and then stored in the memory. Furthermore, the relay station 90 extracts data that is to be transmitted from the memory and conveys it to the transmitter baseband processing unit 110. Next, it makes it into a frame in compliance with the communication protocol and performs error control encoding or digital modulation. Then, the transmitter RF/DAC unit 108 is used to include the digitally-modulated data into a carrier wave, and a frequency f2 element is extractd by the band convey filter 106 to transmit it to the mobile communication terminal through the antenna 104.

In the uplink channel, the relay station 90 receives the RF signal for frequency f1 transmitted by the access point through the antenna 104 and the band convey filter 107, converts these RF signals into a digital signal by the receiver RF/ADC unit 109, and also performs digital demodulation, error control decoding, frame analysis, and so forth by the receiver baseband processing unit 111. The resulting data is conveyed to the communication controlling unit 92, processed by a predetermined process, and stored in the memory. Moreover, the relay station 90 extracts data that is to be transmitted from the memory and conveys it to the transmitter baseband processing unit 100, which performs frame building, error control encoding, digital modulation, and so on. Furthermore, it is converted into an RF signal by the transmitter RF DAC unit 98, and then the f1 frequency element is extractd by the band convey filter 96 and transmitted to the mobile communication terminal via the antenna 94.

As explained above, the transmitter RF/DAC unit 98 and the receiver RF/ADC unit 109 use the same frequency f1 for communication, so there is a risk that the output signal of the transmitter RF/DAC unit 98 may traverse into the receiver RF/ADC unit 109, causing interference. To prevent such interference, the relay station 90 includes a circuit corresponding to the RF-level interference-eliminating circuit 79 in Figure 7 between the transmitter RF/DAC unit 98 and the receiver RF/ADC unit 109. This circuit consists of an RF signal splitting unit 121 provided at the next level of the transmitter RF/DAC unit 98, a gain regulator 122, a delay device 123, and an accumulator 136 provided at the previous level of the receiver RF/ADC unit 109. The functionalities thereof correspond, respectively, to those of the RF signal splitting unit 75, the gain regulator 76, the delay device 77, and the accumulator 78 in Figure 7. Furthermore, between the transmitter RF/DAC unit 98 and the receiver RF/ADC unit 109, the relay station 90 has a circuit corresponding to the digital-level interference-eliminating circuit 83 in Figure 7. This circuit consists of a digital signal splitting unit 124 provided at the previous level of the transmitter RF/DAC unit 98, the delay circuit 125, and the interference eliminating unit 137. Their functionalities correspond, respectively, to those of the digital signal splitting unit 80, the delay device 81, and the interference eliminating unit 82 in Figure 7. In Figure 8, between the transmitter RF/DAC unit 98 and the receiver RF/ADC unit 109, the relay station 90 includes both the RF-level interference-eliminating circuit and the digital-level interference-eliminating circuit, but even only one of these may be included in an embodiment.

In the same way, the receiver RF/ADC unit 99 and the transmitter RF/DAC unit 108 use the same frequency f2 for communication, so the output RF signal of the transmitter RF/DAC unit 108 can be captured by the receiver RF/ADC unit 99, causing interference. Therefore, in order to prevent such interference, between the receiver RF/ADC unit 99 and the transmitter RF/DAC unit 108, the relay station 90 has a circuit that corresponds to the RF-LEVEL interference-eliminating circuit 79 in Figure 7. This circuit consists of the RF signal splitting unit 131 provided at the next level of the transmitter RF/DAC unit 108, the gain regulator 132, the delay device 133, and the accumulator 136 at the previous level of the receiver RF/ADC unit 109. Their functionalities correspond, respectively, to the RF signal splitting unit 75, the gain regulator 76, the delay device 77, and the accumulator 78 in Figure 7. Furthermore, between the receiver RF/ADC unit 99 and the transmitter RF/DAC unit 108, the relay station 90 has a circuit that corresponds to the digital-level interference-eliminating circuit 83 in Figure 7. This circuit consists of the digital signal splitting unit 134 provided at the previous level of the transmitter RF/DAC unit 108, the delay circuit 135, and the interference eliminating unit 127. Their functionalities, respectively, correspond to those of the digital signal splitting unit 80, the delay device 81, and the interference eliminating unit 82 in Figure 7. Between the receiver RF/ADC unit 99 and the transmitter RF/DAC unit 108, the relay station 90 has both an RF-level interference-eliminating circuit and a digital level interference-eliminating circuit, but even only one of these may be included in an embodiment.

### [Embodiment 4]

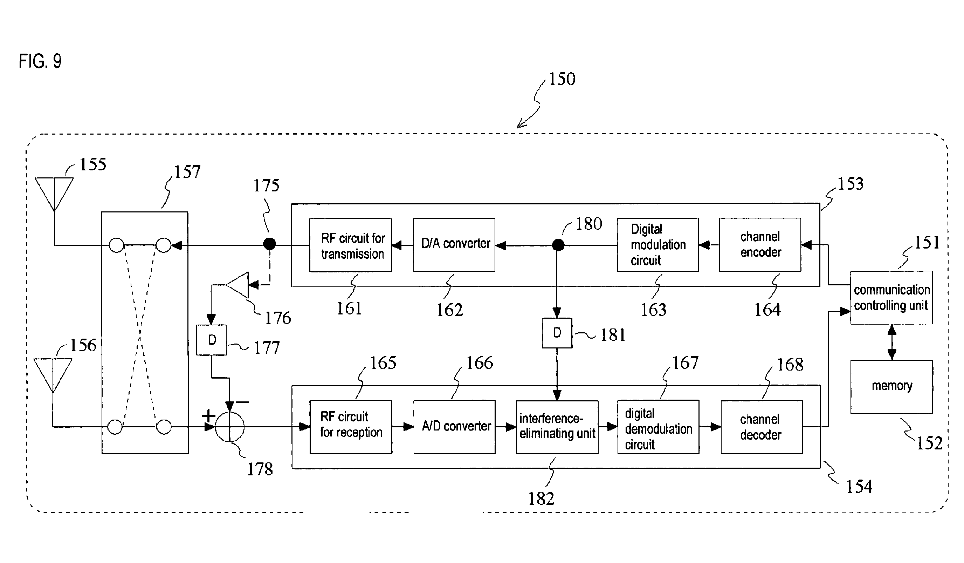

Next, with reference to Figure 9, an embodiment including both features of Embodiment 1 in Figure 2 and Embodiment 2 in Figure 7 will be explained. Figure 9 is a block diagram of the relay station in these embodiments of the present invention.

Similar to the relay station 10 in Figure 2, the relay station 150 in this embodiment is a relay station that relays communication of the Time-Division Duplex (TDD) architecture. The relay station 150 includes a communication controlling unit 151, a memory 152, a transmitter circuit 153, a receiver circuit 154, a first antenna 155, a second antenna 156, an antenna switch 157, and so forth. These functional blocks have the same functionalities of the equivalents in Figure 2. In addition, the first antenna 155 and second antenna 156 have directivity; the first antenna 155 has directivity toward the access point, and the second antenna 156 has directivity in an opposite direction, which is the direction in which the mobile communication terminal is situated.

The transmitter circuit 153 includes an RF circuit for transmission 161, a D/A converter 162, a digital modulation circuit 163, a channel encoder 164, and so forth. The receiver circuit 154 includes an RF circuit for reception 165, an A/D converter 166, a digital demodulation circuit 167, a channel decoder 168, and so on. Such functional blocks have the same functionalities as the corresponding functional blocks in Figure 2.

Additionally, between the transmitter circuit 153 and the receiver circuit 154, the relay station 150 has a circuit corresponding to the RF-level interference-eliminating circuit 79 in Figure 7. This circuit consists of an RF signal splitting unit 175 provided at the next level of the transmitter circuit 153, a gain regulator 176, a delay device 177, and an accumulator 178 provided at the previous level of the receiver circuit 154. The functionalities thereof, respectively, correspond to those of the RF signal splitting unit 75, the gain regulator 76, the delay device 77, and the accumulator 78 in Figure 7. In addition, between the transmitter circuit 153 and the receiver circuit 154, the relay station 150 has a circuit that corresponds to the digital level interference-eliminating circuit 83 in Figure 7. This circuit consists of a digital signal splitting unit 180 provided at the next level of the digital modulation circuit 163, a delay circuit 181, and an interference eliminating unit 182. Functionalities of these respectively correspond to those of the digital signal splitting unit 80, the delay device 81, and the interference eliminating unit 82 in Figure 7. In Figure 9, between the transmitter circuit 153 and the receiver circuit 154, the relay station 150 includes both an RF-level interference-eliminating circuit and a digital-level interference-eliminating circuit, but even only one of these may be included in an embodiment.

The present invention is preferably used to relay radio waves in wireless communication such as in a mobile phone network or a wireless LAN, as shown in the embodiments mentioned above. However, the present invention is not limited to such embodiments, and a variety of other embodiments are possible within the scope of the present invention. For example, the present invention is advantageous as not only a relay station for a wireless LAN with IEEE802.11 protocol but also a relay station in a general multihop network. Additionally, the present invention can be integrated into a mobile terminal and implemented as a mobile terminal that serves as a terminal and a relay station, which is a promising embodiment. Furthermore, an embodiment using not only a sector antenna or an adaptive array as is often used but also a multiplexed antenna such as an MIMO (Multiple Input Multiple Output) is possible as the first antenna or second antenna depicted in Figure 2 and the like.

### [Brief Description of the Drawings]

[Figure 1] An illustration for explaining one example of situations in which the present invention may be used.
[Figure 2] A block diagram for explaining Embodiment 1 of the relay station according to the present invention.
[Figure 3] An illustration for demonstrating operation of an antenna switch.
[Figure 4] An illustration for explaining operations of the relay station shown in Figure 2.
[Figure 5] An illustration for explaining how communication is relayed by the relay station shown in Figure 2.
[Figure 6] An illustration for explaining how the present invention is used, using one example.
[Figure 7] A block diagram for explaining Embodiment 2 of the relay station according to the present invention.
[Figure 8] A block diagram for explaining Embodiment 3 of the relay station according to the present invention.
[Figure 9] A block diagram for explain Embodiment 4 of the relay station according to the present invention.

### [Explanation of the numeral symbols]

- 10: relay station
- 11: communication controlling unit
- 12: memory
- 13: transmitter circuit
- 14: receiver circuit
- 15: first antenna
- 16: second antenna
- 17: antenna switch
- 21: RF circuit for transmission
- 22: D/A converter
- 23: digital modulation circuit
- 24: channel encoder
- 25: RF circuit for reception
- 26: A/D converter
- 27: digital demodulation circuit
- 28: channel decoder

## Claims

1. A relay station to be located in a communication channel between a first communication device and a second communication device, comprising:
- a first antenna;
- a second antenna;
- a transmitter circuit that converts a baseband signal into an RF signal to be transmitted;
- a receiver circuit that extracts the baseband signal from the received RF signal;
- a switching unit that switches between a first state in which said first antenna is connected to said transmitter circuit, and said second antenna is connected to said receiver circuit and a second state in which said first antenna is connected to said receiver circuit and said second antenna is connected to said transmitter circuit; and
- a communication controlling unit that obtains the baseband signal derived from the RF signal received from either one of said first and second communication devices and then, after predetermined process is applied to communication data included in said baseband signal, said communication controlling unit transmits said communication data through said transmitter circuit to another communication device.

2. A relay station according to Claim 1, wherein said switching unit switches between said first state and said second state according to a predetermined timing pattern.

3. A relay station according to Claim 1 or 2, wherein said communication controlling unit transmits data through said transmitter circuit while receiving data through said receiver circuit.

4. A relay station according to any of Claims 1 to 3, wherein said predetermined process relates to at least one of: a determination as to whether said communication data is to be relayed, a determination as to whether the communication device that said communication data needs to reach is situated within the area covered by the relay station, and a determination based on the distance between the relay station and the communication device that said communication data needs to reach.

5. A relay station according to any of Claims 1 to 4, wherein said communication controlling unit retains said information obtained during said first state and then transmits said retained information for subsequent said first state.

6. A relay station according to any of Claims 1 to 5, wherein said communication controlling unit retains said information obtained during the said second state and then transmits said retained information for subsequent said second state.

7. A relay station according to any of Claims 1 to 6, wherein said relay station relays communication of a Time Division Duplex (TDD) architecture and said switching unit switches between said first state and said second state at a switch timing between a downlink and an uplink.

8. A relay station according to any of Claims 1 to 7, further comprising a first duplicating unit that splits the RF signal to be transmitted that is output by said transmitter circuit and duplicates said RF signal to be transmitted, and a first interference-reducing unit that adjusts the amplitude and/or phase of said duplicated RF signal and deducts said adjusted RF signal from the RF signal that is input to said receiver circuit.

9. A relay station according to Claim 8, wherein a first interference-eliminating circuit adjusts the amplitude and/or phase of said duplicated RF signal to that of said RF signal to be transmitted originated from the antenna connected to said transmitter circuit and captured by the antenna connected to said receiver circuit.

10. A relay station according to any of Claims 1 to 9, further comprising a second duplicating unit that splits a signal to be transmitted before being converted into an RF signal to be transmitted by said transmitter circuit and duplicates said signal to be transmitted and a second interference-eliminating circuit that adjusts the amplitude and/or phase of said duplicated signal and, in said receiver circuit, deducts said adjusted signal from the received signal after being converted from the RF signal.

11. A relay station according to Claim 10, wherein said second interference-eliminating circuit adjusts the strength and/or phase of said duplicated signal to that of said signal to be transmitted that traverses into said receiver circuit through the antenna connected to said receiver circuit from the antenna connected said transmitter circuit.

12. A relay station according to any of Claims 1 to 11, wherein said first antenna and/or said second antenna has directivity.

13. A relay station according to any of Claims 1 to 12, wherein said first antenna and/or said second antenna comprises a group of antennas.

14. A relay station according to any of Claims 1 to 13, wherein said first antenna is used for communication with said first communication device, and said second antenna is used for communication with said second communication device.

15. A relay station according to any of Claims 1 to 14, which relays communication between an access point in a wireless LAN and a terminal.

16. A relay station according to any of Claims 1 to 14, which relays communication between an access point for a cellular wireless telephone and a terminal.

17. A relay station according to any of Claims 1 to 14, which relays communication between terminals in a multihop network.

18. A communication terminal that includes the relay station according to any of Claims 1 to 17.

19. A method for relaying, via a relay station, a signal exchanged between a first communication device and a second communication device that communicate using a Time Division Duplex (TDD) architecture, wherein:
- during a first downlink,
· said first communication device transmits a first RF signal to said relay station, and
· said relay station receives said first RF signal and extracts a first baseband signal contained in said first RF signal;
- during a first uplink after said first downlink,
· said second communication device transmits a second RF signal to said relay station, and
· said relay station receives said second RF signal and extracts a second baseband signal contained in said second RF signal;
- during a second downlink after said first uplink,
· said first communication device transmits a third RF signal to said relay station, and
· said relay station converts said first baseband signal into an RF signal to be transmitted and transmits the same to said second communication device, and also receives said third RF signal and extracts a third baseband signal contained in said third signal; and
- during a second uplink after said second downlink,
· said second communication device transmits a fourth RF signal to said relay station, and
· said relay station converts said second baseband signal into an RF signal to be transmitted and transmits the same to said first communication device, and also receives said fourth RF signal and extracts a fourth baseband signal contained in said fourth signal.

20. A relay method according to Claim 19, wherein said relay station - if there is no communication device to which said extracted baseband signal may be transmitted within the coverage area of said relay station - does not convert said baseband signal into an RF signal to be transmitted and discards it.

21. A relay method according Claim 19 or 20, wherein a first antenna used to communicate with said first communication device and a second antenna used to communicate with said second communication device is provided; during a downlink, connecting said first antenna to a receiving circuit of said relay station and also connecting said second antenna to a transmitting circuit of said relay station; and during an uplink, connecting said first antenna to said transmitting circuit and also connecting said second antenna to said receiving circuit.

22. A relay station to be located in a communication channel between a first communication device and a second communication device, comprising:
- a first antenna;
- a second antenna;
- a transmitter circuit connected to either one of said first antenna or said second antenna, that converts a baseband signal into an RF signal to be transmitted;
- a receiver circuit connected to the other of said first antenna or said second antenna, that extracts said baseband signal from the received RF signal;
- a communication controlling unit that transmits data through said transmitter circuit while receiving said data through said receiver circuit;
- a first duplicating unit that splits the RF signal to be transmitted that is output by said transmitter circuit and duplicates said RF signal to be transmitted; and
- a first interference-eliminating unit that adjusts the amplitude and/or phase of said duplicated RF signal and deducts said adjusted RF signal from the RF signal that is input into said receiver circuit.

23. A relay station according to Claim 22, wherein said first interference-eliminating circuit adjusts the amplitude and/or phase of said duplicated RF signal to that of said RF signal to be transmitted originated from the antenna connected to said transmitter circuit and captured by the antenna connected to said receiver circuit.

24. A relay station to be located in a communication channel between a first communication device and a second communication device, comprising:
- a first antenna;
- a second antenna;
- a transmitter circuit connected to either one of said first antenna or said second antenna, that converts a baseband signal into a RF signal to be transmitted;
- a receiver circuit connected to the other of said first antenna or said second antenna, that extracts said baseband signal from received RF signal;
- a communication controlling unit that transmits data through said transmitter circuit while receiving said data through said receiver circuit;
- a second duplicating unit that splits a signal to be transmitted before being converted into an RF signal to be transmitted by said transmitter circuit and duplicates said signal to be transmitted; and
- a second interference-eliminating circuit that adjusts the strength and/or phase of said duplicated signal and, in said receiver circuit, deducts said adjusted signal from the received signal after being converted from the RF signal.

25. A relay station according to Claim 24, wherein said second interference-eliminating circuit adjusts the strength and/or phase of said duplicated signal to that of said signal to be transmitted that traverses into said receiver circuit through the antenna connected to said receiver circuit from the antenna connected to said transmitter circuit.

26. A relay station according to any of Claims 22 to 25, wherein said first antenna and/or said second antenna has directivity.

27. A relay station according to any of Claims 22 to 26, wherein said first antenna and/or said second antenna is a group of antennas.

28. A relay station according to any of Claims 22 to 27, further comprising a switching unit that switches between a first state in which said first antenna is connected to said receiver circuit, and said second antenna is connected to said receiver circuit and a second state in which said first antenna is connected to said receiver circuit, and said second antenna is connected to said transmitter circuit.

29. A relay station according to any of Claims 22 to 28 that relays communication via a Time Division Duplex (TDD) system.

30. A relay station according to any of Claims 22 to 28 that relays communication via a Frequency Division Duplex (FDD) system.

31. A relay station according to any of Claims 22 to 30, which relays communication between an access point in a wireless LAN and a terminal.

32. A relay station according to any of Claims 22 to 30, which relays communication between a terminal and an access point for a cellular wireless telephone.

33. A relay station according to any of Claims 22 to 30, which relays communication between terminals in a multihop network.

34. A communication terminal that includes A relay station according to any of Claims 22 to 33.
